# EUROPEAN PATENT APPLICATION

(11) **EP 1 365 604 A2**
(43) Date of publication of application: **26.11.2003**
(21) Application number: 03101269.3
(22) Date of filing: 08.05.2003
(51) Int. Cl.: H04Q 7/22

(54) **Message acknowledgement in a mobile communication network**

(30) Priority: 20.05.2002 FI 20020943
(71) Applicant: Distocraft Oy, 15140 Lahti (FI)
(72) Inventor: Karvanen, Jukka, 15840, Lahti (FI); Nyman, Esa, 00210, Helsinki (FI); Multanen, Jarkko, 15950, Lahti (FI); Pohja, Antti, 15140, Lahti (FI)
(74) Representative: Virkkala, Jukka Antero

(57) **Abstract**

A messaging system (MS) for relaying a message from a sending terminal (A) to a receiving terminal (B). The messaging system (MS) receives an original message (OM) from the sending terminal (A) and sends an application link (4-5) to the receiving terminal (B). In response to receiving an indication (4-20) of a user activating the application link, the messaging system (MS) sends two or more status links (4-50) to the receiving terminal (B). In response to receiving a user-selected status link (4-75), the messaging system (MS) sends the sending terminal (A) an acknowledgment (AK) that indicates the user-selected status link. The messaging system (MS) may authenticate (4-25 ... 4-45) the user before sending the contents of the original message (OM) to the receiving terminal (B).

## Description

### BACKGROUND OF THE INVENTION

The invention relates to a technique for acknowledging messages in a mobile communication network.

The GSM system comprises a messaging technique known as short message service (SMS). The SMS service has turned out to be surprisingly popular and it has been used as a platform for a variety of different services, in addition to individual inter-subscriber messages.

A problem associated with the GSM short message service is the fact that a message's sender does not know if the recipient has personally received the message. To overcome this problem, the recipient must prepare and send a free-format short message that indicates that the original message was received. Attempts have been made to rectify the situation with proprietary equipment, such as short message service centres, that provide the message sender with an acknowledgment as soon as the short message has been delivered to the recipient's terminal. Such automatic replies are at best only a partial solution to the problem, however. As is well known, there are situations in which a terminal must be muted and the terminal user is completely unaware of any incoming messages. Thus an automatic, machine-generated acknowledgment is analogous to an out-of-office autoreply from an e-mail message: the message has been delivered to the recipient's terminal but unless the recipient prepares and sends a personal reply, the sender cannot know whether the recipient has read the message. On the other hand, drafting a personal reply is awkward and subject to errors, considering the limited user interfaces in mobile terminals.

Also, Wireless Application Protocol (WAP) comprises a technique known as WAP push that supports sending a message to a browser program residing in a mobile terminal.

### BRIEF DESCRIPTION OF THE INVENTION

An object of the present invention is to provide a method and an apparatus for permitting a message sender to verify that the intended recipient has seen a message. As used herein, the message sender may refer to a person using a sending terminal or an application such as a software agent. The object of the invention is achieved by a method and an apparatus which is characterized by what is stated in the independent claims. The preferred embodiments of the invention are disclosed in the dependent claims.

The invention is based on the use of links. A messaging system relays a message from a sending terminal to a receiving terminal. The messaging system receives an original message from a sending terminal. It then provides the message with one or more links and sends the message, along with the one or more links, to the receiving terminal. In response to receiving an indication of a user-selected link from the receiving terminal, the messaging system sends the sending terminal an acknowledgment that indicates the user-selected link. It may take some time before the receiving terminal user acknowledges the message. In order to be able to send an acknowledgment to the sending terminal, the messaging system must generate and store an internal reference to the original message.

According to one aspect of the invention, a mobile communication system is complemented by a messaging system for relaying a message from a sending terminal to a receiving terminal. The messaging system comprises:
first means for receiving an original message from a sending terminal,
second means for providing the message with one or more links and for sending the message to the receiving terminal;
third means for receiving an indication of a user-selected link from the receiving terminal;
fourth means for sending the sending terminal an acknowledgment that indicates the user-selected link.

The first means for receiving the original message are conventional. The means comprise the necessary hardware interface to the telecommunication network(s) in question, a storage for storing the message and information on the sender of the message and logic for receiving and storing the message. The first means also generate and store a reference to the message so that in response to receiving a link activation from the receiving terminal, the messaging system is able to trace the original message and its sender.

The second means for sending the message and for providing it with the one or more links comprise conventional hardware. The second means also comprise a software routine for inserting the link(s) into the message body. The third means for receiving an indication of a user-selected link similarly comprise conventional hardware and a software routine to trigger further action. For instance the further action may comprise activating the fourth means for sending the acknowledgment to the sending terminal. In some embodiments the further action may comprise authenticating the receiving terminal user. The fourth means for sending the acknowledgment to the sending terminal similarly comprise conventional hardware and software routines for tracing the original message on the basis of the stored reference and for sending the acknowledgment.

An advantage of the invention is that the receiving terminal user can conveniently respond to the incoming message by simply activating the link or one of the links. Links should be understood in a wide, conventional meaning; links are commonly used to direct a user (or user interface) to an address or application in response to a user activation of the link. A preferred embodiment of the invention is based on utilizing application links combined with message references to acknowledge personally incoming messages. This problem is solved by a messaging system according to the invention that sends, in response to receiving an original message from a sending terminal, an application link to the receiving terminal. In response to the receiving terminal user activating the application link, an acknowledgment application is started in the messaging system. According to another preferred embodiment of the invention, the messaging system comprises an authentication logic for authenticating a user of the receiving terminal before sending the contents of the original message to the receiving terminal. The messaging system preferably comprises a queue logic for queuing incoming traffic to the receiving terminal during authentication. The purpose of the queue logic is to prevent further incoming traffic from interfering with the authentication process. Some, or indeed most, messages can be sent without authentication, and the authentication logic may be responsive to an indication in the original message that authentication is required before the message contents are displayed to the recipient.

The messaging system preferably comprises a time control logic for re-sending to the receiving terminal any message to which an expected response is not received with a predetermined period of time.

According to yet another preferred embodiment of the invention, the messaging system comprises a logic for parsing a part of the original message to two or more status links. For example, the original message may end in "%%YesNo" which is parsed to two links, namely [Yes] and [No]. The messaging system may also send a default link to the receiving terminal if the original message does not contain or indicate any links.

According to another preferred embodiment of the invention, the messaging system does not acknowledge messages spontaneously but only in response to a separate query from the sending terminal.

### BRIEF DESCRIPTION OF THE DRAWINGS

In the following the invention will be described in greater detail by means of preferred embodiments with reference to the attached drawings, in which
Figure 1 depicts a messaging system and two terminals;
Figure 2 is a signalling diagram illustrating a basic embodiment of the invention;
Figure 3 is a signalling diagram illustrating a preferred embodiment of the invention for presenting multiple choices to a terminal user;
Figure 4 is a signalling diagram illustrating a preferred embodiment of the invention that provides user authentication;
Figure 5 is a signalling diagram illustrating a preferred embodiment of the invention that provides robust retransmission;
Figures 6 to 8 show how the messaging system can insert links into a message that does not contain any links; and
Figure 9 describes how a sending terminal user can query acknowledgements for messages from the messaging system.

### DETAILED DESCRIPTION OF THE INVENTION

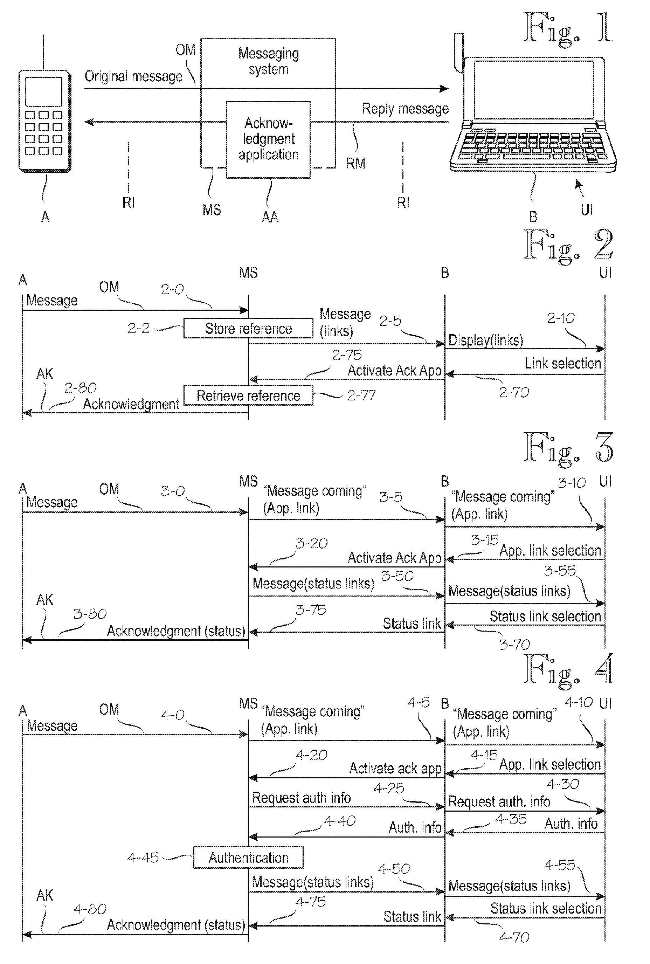

Figure 1 depicts a messaging system MS and two terminals A and B. In this example, the sending terminal A resembles a traditional cellular terminal while the receiving terminal B resembles a sophisticated mobile terminal device such as a mobile telephone with browsing capabilities or a personal digital assistant (PDA) with a radio interface. The receiving terminal B has a user interface UI that is capable of showing links and detecting user activation (selection) of the links. For example, the terminal may have a touch-sensitive display, and a link is activated by a stylus (pointer stick). Or, the link may be activated by cursor keys. In the example shown in Figure 1, the terminals A, B are coupled to the messaging system MS via radio interfaces Rl, but the sending terminal A can be a terminal in a wired network. The receiving terminal B must be connected to a network/protocol that supports links, such as Wireless Application Protocol (WAP).

The sending terminal A user sends an original message OM to the receiving terminal B. In a prior art system, the recipient must compose a free-form reply message RM. Composing a reply and sending it is relatively time-consuming, considering the fact that the reply is often needed to only indicate that the recipient has seen the message. Alternatively, some terminals may automatically send a reply message, but such an automatic reply does not guarantee that the terminal user has seen the message.

This is why the messaging system MS comprises or is operatively coupled to an acknowledgment application AA. The acknowledgment application is a software application operating in the messaging system MS. Note that in Figure 1 it is deliberately open to interpretation whether the acknowledgment application AA is physically resident in the messaging system MS or in a separate server arrangement operatively coupled to the messaging system MS (not shown separately).

The messaging system MS may have conventional network and radio interfaces. The added functionality according to the invention can be implemented by means of enhanced software routines within the messaging system MS and the acknowledgment application AA.

Figure 2 is a signalling diagram illustrating a basic embodiment of the invention. In step 2-0 the sending terminal A sends an original message OM. In step 2-2, The message system MS requests the acknowledgement application AA to generate a reference to the original message OM. The purpose of the reference is that, later when the recipient acknowledges the message, the messaging system can relay the acknowledgment to the sender of the original message. In step 2-5 the message system MS according to the invention provides the message with one or more links and sends the message, along with the link(s), to the receiving terminal B. In step 2-10 the B terminal displays the message contents and the link(s) on the user interface Ul. In step 2-70 the B terminal user selects (activates) a link on the user interface Ul. In other words, the B terminal detects a link selection on the user interface. In step 2-75 the B terminal sends the selected link to the messaging system MS that interprets it as a request to activate the acknowledgment application AA. Let us first assume that the link was a very simple "OK", meaning that the user has personally seen the message. As a result, in step 2-77, the acknowledgment application AA within the messaging system MS retrieves the reference to the original message, and in step 2-80 it sends the A terminal an acknowledgment AK such as "User B responded to the message at (date) (time)".

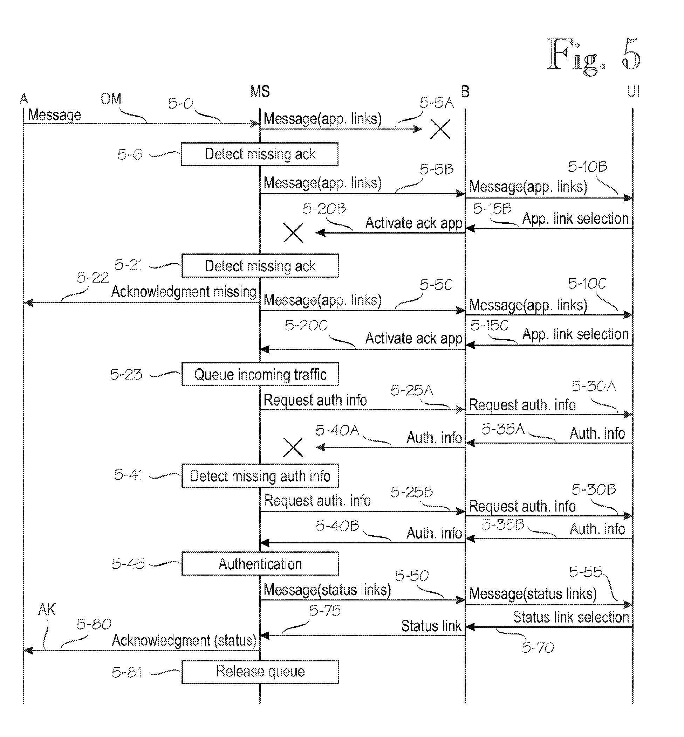

However, many applications and situations require more than a simple "OK" response, such as a "Yes/No" choice. In order to achieve that in a current WAP environment, a more complex dialogue must be used, as will be described next, in connections with Figures 3 and 4.

Figure 3 is a signalling diagram illustrating a preferred embodiment for presenting multiple choices to a terminal user. In step 3-0 the A terminal user similarly sends an original message OM addressed to the B terminal. In step 3-5 the messaging system MS sends the B terminal an application link. Preferably, the actual contents of the message are not sent to the B terminal at this stage but only an indication that a message is coming. One reason for holding the message relates to an optional authentication procedure that will be described in connection with Figure 4. Another reason is that it may be more convenient to the recipient to see the message contents together with the links, and the links cannot be sent yet. In step 3-10 the B terminal shows the application link on the user interface Ul. In step 3-15 the B terminal user activates the application link, and in step 3-20 the B terminal sends the messaging system MS a request to activate the acknowledgment application AA, similar to the basic embodiment shown in Figure 2. But in this embodiment, the messaging system MS does not simply return an acknowledgment to the A terminal. Instead, in step 3-50, the messaging system MS sends the B terminal multiple status links to choose from. For example, the multiple status links may comprise a "Yes/No" choice or "Yes/No/More information", etc. Also, if the actual message contents were not sent in step 3-5, they are sent now. In step 3-55 the B terminal displays the multiple status links (and the message contents, if they were not shown in step 3-10) on its user interface Ul. In step 3-70 the B terminal user selects one of the status links. In step 3-75 the B terminal sends the link to the acknowledgment application AA that relays the corresponding acknowledgment to the A terminal In step 3-80. The acknowledgement from the receiving terminal B is associated to the original message OM by means of a message reference attached to the application link. The message reference is generated by the messaging system MS after it has received the original message from the sending terminal A.

An embodiment as shown in Figure 2 lets the A terminal user see that the B terminal user has seen the message. An embodiment as shown in Figure 3 permits multiple choices for possible responses to the message. But the A terminal user cannot be sure that the person responding to the message is the intended recipient of the message. In case the B user's identity needs verification, a more advanced embodiment must be used.

Figure 4 is a signalling diagram illustrating a preferred embodiment that provides user authentication. The five first steps in Figure 4, namely steps 4-0 through 4-20, are basically similar to the corresponding steps 3-0 through 3-20 in Figure 3, and a detailed description of these steps is not necessary. However, in this embodiment, it is mandatory that the first message 4-5 to the B terminal does not include the contents of the message but only an indication that a message is coming and an application link to the acknowledgement application with indication that authentication is required to receive the message. In step 4-25, when the messaging system MS has received an indication that the user has activated the link and the use of authentication is required, it sends the B terminal a request for authentication information, such as a prompt for a password. In step 4-30 the B terminal shows the request for authentication information on its user interface Ul. In step 4-35 the B terminal user provides the authentication information, such as the password, that the B terminal sends to the messaging system MS in step 4-40. In step 4-45, the messaging system MS authenticates the B terminal user. For example the messaging system may verify the user-supplied password against a previously-stored list of passwords. Assuming that the authentication is successful, the operation proceeds similar to the embodiment shown in Figure 3. More precisely, the remaining steps in Figure 4, namely steps 4-50 through 4-80 correspond to similarly-numbered steps 3-50 through 3-80 in Figure 3.

Note that the authentication per se is not the topic of the present invention, and any known authentication mechanism can be used, including Public Key Infrastructure (PKI), Personal Identification Number (PIN) and a username-password combination

Figure 5 is a signalling diagram illustrating a preferred embodiment of the invention that provides robust retransmission. Up to this point, a perfect radio environment was assumed, meaning that no messages are lost in transmission. But a radio environment is seldom perfect, and a reliable messaging system needs a robust retransmission mechanism. Figure 5 depicts a set of events in a such a system.

In step 5-0 the sending terminal A sends an original message. In step 5-5A the messaging system MS attempts to send the message with the links to the B terminal, but the transmission fails. In step 5-6 the messaging system MS detects the missing acknowledgment and resends the message with the links in step 5-5B. Steps 5-5B through 5-20B correspond to steps 3-5 through 3-20, except that, in step 5-20B, the B terminal's response fails to reach the messaging system MS. In step 5-21 the messaging system MS again detects that the acknowledgment is missing and, optionally, in step 5-22 informs the A terminal that no acknowledgment has been received but the messaging system MS keeps trying. Steps 5-5C through 5-20C, that correspond to steps 3-5 through 3-20, constitute a successful link activation cycle.

In step 5-23 the messaging system MS, before starting the authentication cycle, begins blocking and queuing incoming traffic to the B terminal. The purpose of the traffic blocking and queuing is to prevent incoming traffic from interfering with the authentication process. Steps 5-25A through 5-40A constitute an authentication cycle that correspond to steps 4-25 through 4-40, except that, in step 5-40A, the B terminal's response does not reach the messaging system MS. (Alternatively, the message 5-25A could have been lost in transmission.) In step 5-41 the messaging system MS detects the missing authentication response and initiates a new authentication cycle, steps 5-25B through 5-40B. Steps 5-45 through 5-80 correspond to steps 4-45 through 4-80. In step 5-76 the messaging system MS releases the incoming traffic queue that was established in step 5-23.

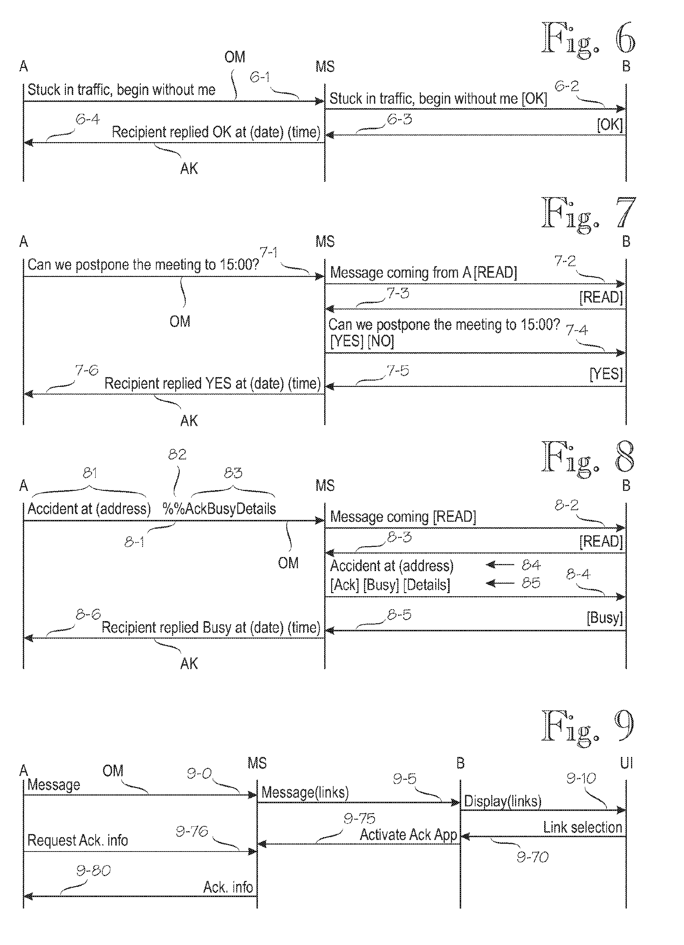

In connection with Figure 1 it was stated that the terminal B must support links. A residual problem is how the A terminal user can determine which links are to be added in the message, if the A terminal does not support links. Some examples are provided in connection with Figures 6 to 8.

Figures 6 to 8 show how the messaging system can insert links into a message that does not contain any links. In Figures 6 to 8 and in their descriptions, links are indicated by text within brackets, such as "[Ack]". The scenario shown in Figure 6 corresponds to the embodiment shown in Figure 2. This scenario illustrates a simple case in which the messaging system MS inserts a single default link that enables the recipient to indicate that they have seen the message. In step 6-1 the A terminal user sends an original message OM, such as a conventional short message. Assume that the A terminal user is late for a meeting. The contents of the message is "Stuck in traffic, begin without me". In step 6-2 the messaging system MS inserts a simple "OK" link to the message and sends it to the B terminal. In step 6-3 the B terminal user activates the link and the B terminal sends the link to the messaging system MS. In step 6-4 the messaging system MS provides a default reply "Recipient replied OK at (date) (time)".

Figure 7 shows a more complex set of events in an embodiment as shown in Figure 3. In step 7-1 the A terminal user sends a short message proposing a schedule change. In this case, the original message again has no links but the messaging system MS inserts two links (a yes/no choice). For instance, the messaging system MS may always insert "[Yes]" and "[No]" as default links if the original message indicates no other links. Or, the messaging system MS may detect that the message 6-1 was not a question and a single default link of "[OK]" is sufficient, whereas the message 6-1 is a question and needs "[Yes]" and "[No]" as default links. As stated in connection with Figure 3, current WAP implementations only permit a single network-initiated link, and in step 7-2, the messaging system MS simply sends a message whose contents are "Message coming from (the A terminal)". A link of "[READ]" is appended to the message. In step 7-3 the B terminal user activates the "[READ]" link, and a session is established between the B terminal and the acknowledgment application AA within the messaging system MS. Now, in step 7-4, the messaging system MS can send the original message plus the two links, "[Yes]" and "[No]". Assume that the B terminal user selects the "[Yes]" link in step 7-5. In step 7-6 the messaging system MS sends the A terminal a message whose contents are "Recipient replied YES at (date) (time)".

Figure 8 shows a more complex scenario in which the A terminal user can select which links are sent to the B terminal, although the A terminal is not able to insert links in the original message. Assume that the terminal users are police or rescue personnel. In step 8-1 the A terminal user sends a message indicating that an accident has happened at (address). The message sender wishes to have three links included, namely, "[Ack]" (for acknowledge), "[Busy]" and "[Details]" but we will again assume that the A terminal does not support links. Accordingly, the A terminal user sends a message that contains a message body part 81, a link separator 82 and a link part 83. The message body part 81 contains the actual contents of the message. The link separator 82, here assumed to be two per cent signs, separates the link part 83 from the message body part 81. The messaging system MS parses the link part 83 according to some predefined syntax. In this example, the syntax is assumed to be such that each capital letter begins a link. Thus the link part 83 of the original message, namely "AckBusyDetails" is parsed to three separate links, namely "[Ack]", "[Busy]" and "[Details]" that are commonly denoted by reference numeral 85. The message body part 81 of the original message is also sent and shown, as indicated by reference numeral 84. The remaining steps in Figure 8 are self-explanatory in view of the previous example. Had the B terminal user selected the link "[Details]", then the A terminal user could have sent more information or placed a call to the B terminal.

In the above-described embodiments the messaging system MS and the acknowledgement application AA forwarded the acknowledgement spontaneously to the sending terminal A as soon as the acknowledgment was received from the receiving terminal B. Figure 9 shows an embodiment in which the sending terminal A may separately request acknowledgement information from the messaging system MS. Steps 9-0 through 9-75 correspond to similarly-numbered steps 2-0 through 2-75 and will not be desribed again. In step 9-76 the sending terminal A contacts the messaging system MS and requests the current acknowledgement status for the original message OM. When the messaging system MS receives the request, it checks the status of acknowledgements for original messages sent by terminal A. In step 9-80 the messaging system MS delivers the current status of acknowledgements to the sending terminal A.

It is readily apparent to a person skilled in the art that, as the technology advances, the inventive concept can be implemented in various ways. The invention and its embodiments are not limited to the examples described above but may vary within the scope of the claims.

## Claims

1. A messaging system (MS) for relaying a message from a sending terminal (A) to a receiving terminal (B), the messaging system (MS) comprising:
first means for receiving an original message (OM) from a sending terminal (A), **characterized by**:
second means for providing the message with one or more links and for sending the message to the receiving terminal (B);
third means for receiving an indication of a user-selected link from the receiving terminal (B);
fourth means for sending the sending terminal (A) an acknowledgment (AK) that indicates the user-selected link.

2. A messaging system (MS) according to claim 1, **characterized in that** the second means comprises:
means for sending an application link (3-5, 4-5, 7-2, 8-2) to the receiving terminal (B);
means, responsive to an indication (3-20, 4-20, 7-3, 8-3) that the application link has been activated in the receiving terminal (B), for sending two or more status links (3-50, 4-50, 7-4, 8-4) to the receiving terminal (B).

3. A messaging system (MS) to claim 2, **characterized by** means for establishing a session with the receiving terminal (B) before sending the two or more status links to the receiving terminal (B).

4. A messaging system (MS) according to any one of the preceding claims, **characterized by** an authentication logic for authenticating (4-25 ... 4-45) a user of the receiving terminal (B) before sending the contents of the original message (OM) to the receiving terminal (B).

5. A messaging system (MS) according to claim 4, **characterized by** a queue logic for queuing (5-23, 5-81) incoming traffic to the receiving terminal (B) during authentication (5-25A ... 5-45).

6. A messaging system (MS) according to claim 4 or 5, **characterized in that** the authentication logic is responsive to an indication in the original message (OM).

7. A messaging system (MS) according to any one of the preceding claims, **characterized by** a time control logic (5-6, 5-21, 5-41) for re-sending to the receiving terminal (B) a message to which an expected response is not received with a predetermined period of time.

8. A messaging system (MS) according to any one of claims 2 to 7, **characterized by** a routine for parsing a part (83) of the original message (OM) to said two or more status links (85).

9. A messaging system (MS) according to any one of the preceding claims, **characterized by** a logic for sending a default link to the receiving terminal (B) if the original message (OM) does not indicate any links.

10. A messaging system (MS) according to any one of the preceding claims, **characterized in that** the fourth means are responsive to a separate inquiry (9-76) from the sending terminal (A).

11. A method for sending a message from a sending terminal (A) to a receiving terminal (B) in a mobile communication system, the method comprising:
a) the sending terminal (A) sending the message via a messaging system (MS);
b) the messaging system (MS) providing the message with one or more status links and sending the message to the receiving terminal (B);
c) in response to receiving the message, the receiving terminal (B) displaying the one or more status links on the receiving terminal (B)'s user interface;
d) in response to detecting a user selection of one of the status links on the receiving terminal (B)'s user interface, the receiving terminal (B) sending the messaging system (MS) a status reply that indicates the user selection; and
e) in response to receiving the status reply, the messaging system (MS) relaying the status reply to the sending terminal (A).
